Europäisches Patentamt

(19) European Patent Office

Office européen des brevets

(11) Publication number : **0 472 448 A2**

(12) **EUROPEAN PATENT APPLICATION**

(21) Application number : **91402119.1**

(51) Int. Cl.⁵ : **B05C 17/005**

(22) Date of filing : **29.07.91**

(30) Priority : **23.08.90 DE 4026685**

(43) Date of publication of application :
**26.02.92 Bulletin 92/09**

(84) Designated Contracting States :
**AT BE CH DE ES FR GB IT LI NL SE**

(71) Applicant : **BOSTIK LIMITED**
**Ulverscroft Works Ulverscroft Road**
**Leicester LE4 6BW (GB)**
㊽ **GB**

(71) Applicant : **Bostik GmbH**
**Gattenhöferweg 36**
**W-6370 Oberursel (DE)**
㊽ **CH DE IT LI NL AT**

(71) Applicant : **SA BOSTIK FRANCE**
**Route nationale 19**
**F-77170 Coubert (FR)**
㊽ **BE ES FR**

(71) Applicant : **BOSTIK AB**
**Strandbadsvaegen**
**S-25229 Helsingborg (SE)**
㊽ **SE**

(72) Inventor : **Piestert, Gerhard**
**Ahornweg 11**
**W-6870 Schwetzingen (DE)**
Inventor : **Hahn, Joachim**
**Am Bornfeld 6**
**W-6384 Schmitten (DE)**

(74) Representative : **Dubost, Thierry**
**CRAY VALLEY Service Propriété Industrielle**
**Parc Technologique ALATA BP 22**
**F-60550 Verneuil-en-Halatte (FR)**

(54) **Process and device for combining two pasty materials.**

㊿ In a process for combining two pasty materials having the same or different viscosities, the first pasty material is embedded in the other pasty material during the combining operation and is completely surrounded by the latter.

EP 0 472 448 A2

Fig. 1

In mixing guns for two-component systems having two paradell chambers of different diameter, the two components are supplied alongside one another in a tube. However, this results in problems if, for example in the case of certain moisture-curing two-component adhesives or sealants, an increase of the concentration of the hardener component in the interface to the substrate due to incomplete mixing results in a noticeable reduction in adhesion.

Therefore an aim of the invention is to provide a process and a device comprising two mixing chambers of different diameters in which two pasty materials, especially two pasty adhesive or sealant components, can be constantly combined in a certain pre-specified volume ratio in such a manner that a closed outer layer of the pasty material coming from the mixing chamber of larger diameter is always maintained around the other pasty material.

The present invention is namely intended for combining non-Newtonian liquids or high viscosity Newtonian liquids.

This aim is achieved according to the invention by a process for combining two pasty materials having the same or different viscosities, characterized in that, the first pasty material is embedded in the other pasty material during the combining operation and is completely surrounded by the latter.

According to an embodiment of the invention, the two pasty materials are combined in a volume ratio of approximately 1 : 1. According to another embodiment of the process of the invention, the two pasty materials are combined in volume ratio different from 1 : 1, for example a volume ratio of up to about 10 : 1, i.e. the two pasty materials to be combined have different volumes. In this case, it is preferable that the pasty material having the lower volume is injected into the pasty material having the higher volume.

According to another embodiment of the invention, after the first pasty material is embedded in the other pasty material, the process comprises a further step where the two pasty materials are mixed together.

The device for combining two pasty materials, especially two pasty adhesive or sealant components, of different or the same viscosities from two mixing unit chambers having different diameters and arranged substantiallyparallel to one another is characterised in that the exit zone of the mixing chamber of larger diameter completely surrounds a supply nozzle which forms the exit zone of the mixing chamber of smaller diameter, thereby forming an annular space around the outlet of the supply nozzle.

The essence of the process and device according to the invention is that the supply of one pasty material is arranged in such a manner that it is completely surrounded by the other pasty material when it leaves the device. By means of the device according to the invention, pasty materials of identical or different viscosities can now be introduced into one another in very different volume ratios, depending on the dimensions, of the two mixing chambers in order to mix them with one another in a further part of the device downstream. According to a preferred embodiment of the invention, the device has the essential advantage that the plastic bags which are accomodated in the mixing chambers and which contain the pasty materials to be combined are automatically opened by at least two integrated puncturing tips, so that there is no need for them to be cut open in advance before introduction into the mixing chambers. The device is furthermore designed in such a manner that it can be produced simply and inexpensively as an injection moulded or casted product and can preferably be in the form of a disposable article.

The device according to the invention is preferably intended for mixing guns for application of two-component adhesives and sealants, where it is generally located upstream of a static mixer. The device can be used both for directly filled mixing units having two parallel chambers and for mixing units which have two parallel cartridges or into which plastic bags containing the pasty materials are inserted. It can of course also be used in other areas, for example in the processing of foodstuffs, where similar problems exist in mixing and combining materials.

Further advantages arise from the following explanation of the invention by means of illustrative embodiments with reference to the attached drawing, in which:

Fig. 1 shows a partial sectioned side view of a spray gun with attached device for combining two materials,

Fig. 2 shows a side view of the device of Fig. 1,

Fig. 3 shows a detailed section of circle X in Fig. 5,

Fig. 4 shows a plan view of the device, and

Fig. 5 shows a partial sectioned side view of the device as used together with the spray gun of Fig. 1.

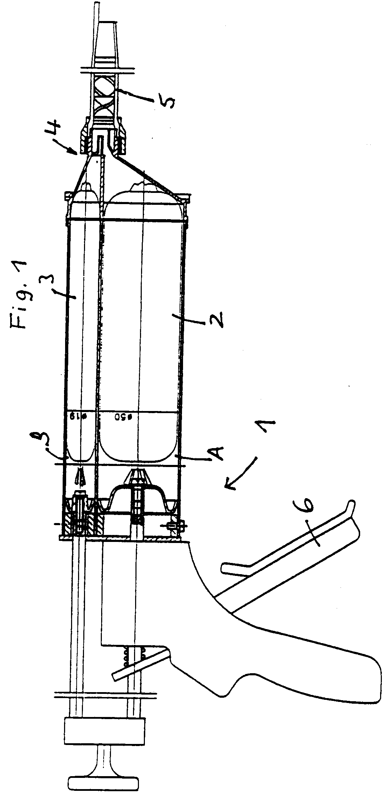

Fig. 1 shows a spray gun 1, which is known per se, having two mixing chambers A and B of different diameters and which are arranged alongside and parallel to one another and serve to accommodate plastic bags 2 and 3 containing the pasty materials to be combined A device 4 for combining the two pasty materials is attached to the spray gun. The device 4 carries a mixing and delivery device 5 at its other end.

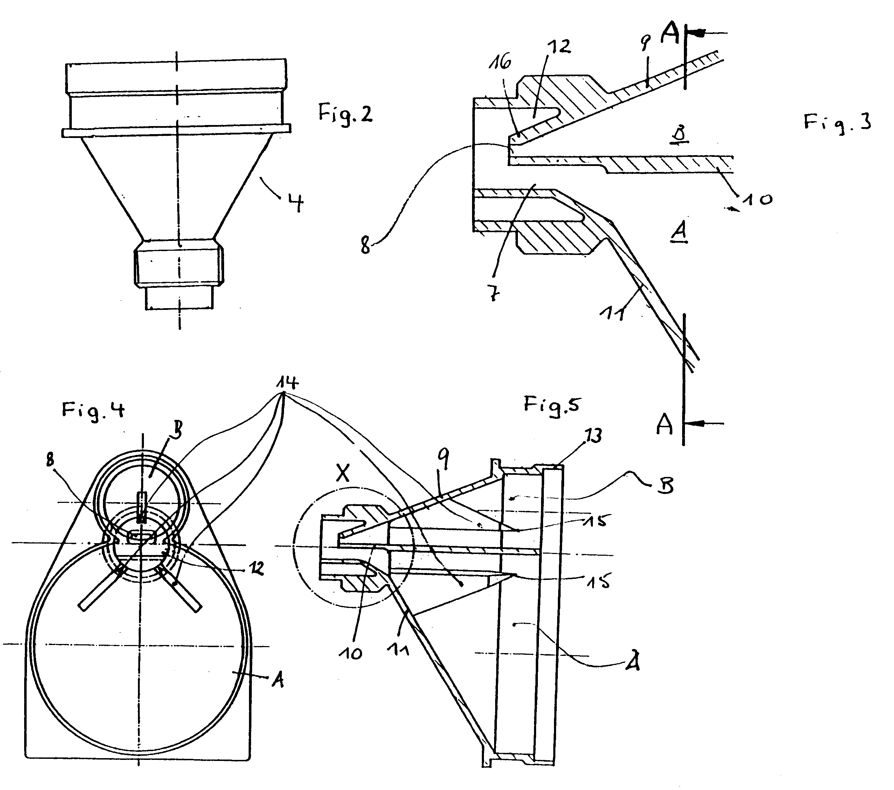

Fig. 2, in particular, shows the device described in greater detail below with reference to Figs. 3, 4 and 5.

As clearly shown in Fig. 5, the two chambers A and B of Fig. 1 terminate in narrowed end sections. Thus, as shown in Fig. 3, chamber B is limited by the angled outer wall 9, which is titled toward the delivery end, and by a wall 10, which also serves as a separating wall for the two chambers A and B. Likewise, the larger volume chamber A, at the bottom in Fig. 3, is limited by the separating wall 10 and the lower angled wall 11 and their continuations.

As shown in particular in Fig. 3, the outlet of chamber B is arranged in such a manner that it is completely surrounded by the outlet of chamber A, which forms an annular space 12. The diameter of the exit zone 7 of chamber A is selected so that sufficient volume is present for the pasty material leaving chamber A so that the further viscous and pasty material coming from chamber B and its supply nozzle 8 is completely surrounded by the pasty material coming from chamber A and is injected into the latter. There is thus no possibility of the pasty material coming from chamber B coming into contact with the internal walls of the exit zone 7. The supply nozzle 8 preferably has a semi-circular cross-section.

In Fig. 5, attachment parts 14, which each have a pointed end 15 and project into the cylindrical part of the two chambers A and B, are formed on the internal surface of the outer wads 9 and 11 of the two chambers A and B. In Fig. 4, three puncturing parts 14 of this type is provided, but their number can be increased if desired. An essential feature here is that when in operation the trigger 6 of the spray gun 1 (see Fig. 1) is actuated and two pistons act against the plastic bags 2 and 3 and squeeze them to the right as in Fig. 1, the opposite ends of these two plastic bags 2 and 3 are punctured by the pointed ends 15 so that the material present in the bags can in each case be forced into the conical section of the device 4. There is thus no need to separately slit open the bags before operating the spray gun 1. At the right end of the device shown in Fig. 5 is a circular collar 13 which serves to attach and fix the device 4 into the free end of the spray gun 1. The device 4 in Fig. 1 is adjacent to a mixing and delivery device 5, which is in the form of an attachment and in which the combined components are, if necessary, mixed with one another and can be applied to the desired environment through the exit nozzle of the spray gun 1.

The device according to the invention may be injection moulded or casted from an expedient plastic and can be discarded after being used once. The device can also be made from a light metal in particular aluminium. In this case, the device may be reusable.

Expedient modifications can be carried out in the embodiment described, but without departing from the essence of the invention.

## Claims

1. Process for combining two pasty materials having the same or different viscosities characterized in that, the first pasty material is embedded in the other pasty material during the combining operation and is completely surrounded by the latter.

2. Process according to claim 1, characterized in that the two pasty materials are combined in a volume ratio of 1 : 1.

3. Process according to claim 1, characterized in that the two pasty materials are combined in a volume ratio different from 1 : 1 and up to 10 : 1.

4. Process according to claim 3, characterized in that the pasty material having the lower volume is injected into the pasty material having the higher volume.

5. Device for combining two pasty materials of different or same viscosities from two mixing unit chambers having different diameters and arranged parallel to one another, characterized in that the exit zone (7) of the chamber (A) of larger diameter completely surrounds a supply nozzle (8), which forms the exit zone of the chamber (B) of smaller diameter, thereby forming an annular space ( 12) around the outlet of the supply nozzle.

6. Device according to claim 5, characterized in that the two mixing chambers (A, B) are separated from one another by a separating wall ( 10) whose free end, together with the extension ( 16) of an angled outer wall (9), simultaneously limits the supply nozzle (8).

7. Device according to claim 5 or 6, characterized in that at least two puncturing parts (14), whose points project into the cylindrical sections of the chambers (A, B) which accomodate plastic bags (2, 3) containing the pasty materials to be combined, are formed on the internal surface of the outer walls (9, 11).

8. Device according to any of claims 5 to 7, characterized in that it is in injection moulded or casted from plastic.

9. Device according to any of claims 5 to 7, characterized in that it is made from a light metal.

10. Device according to any of claims 5 to 9, characterized in that the outlet zone of the supply nozzle (8) has a semi-circular cross-section.

Fig. 1

Fig.2

Fig.3

Fig.4

Fig.5